# EUROPÄISCHE PATENTANMELDUNG

(11) **EP 3 518 470 A1**
(43) Veröffentlichungstag der Anmeldung: **31.07.2019**
(21) Anmeldenummer: 18153183.1
(22) Anmeldetag: 24.01.2018
(51) Int. Cl.: H04L 12/40

(54) **VERFAHREN ZUR DATEN-KOMMUNIKATION IN EINEM INSBESONDERE INDUSTRIELLEN NETZWERK, VORRICHTUNG ZUR DURCHFÜHRUNG DES VERFAHRENS, COMPUTERPROGRAMM SOWIE COMPUTERLESBARES MEDIUM**

(71) Anmelder: Siemens Aktiengesellschaft, 80333 München (DE)
(72) Erfinder: Fischer, Thomas, 90763 Fürth (DE); Höme, Stephan, 91126 Schwabach (DE); Jung, Konstantin, 90537 Feucht (DE); Kerschbaum, Sven, 90768 Fürth (DE); Kießling, Marcel, 91235 Velden (DE); Volkmann, Frank, 90475 Nürnberg (DE)

(57) **Zusammenfassung**

Die Erfindung betrifft ein Verfahren zur Daten-Kommunikation in einem insbesondere industriellen Netzwerk, für einen Datentransfer zwischen wenigsten einem Daten anbietenden Sender (1) und wenigstens einem, insbesondere mehreren von dem Sender (1) über einen jeweiligen Netzwerkpfad Daten empfangenden Empfängern (2, 3, 4, 5) via SRP, bei dem von wenigstens einem Empfänger (2, 3, 4, 5) für einen von ihm angefragten Stream eine gewünschte Stream-Qualitätsanforderung, insbesondere Streamklasse angegeben, und insbesondere an den wenigstens einen Sender (1) gesendet wird, und/oder bei dem von dem wenigstens einen Sender (1) eine Stream-Qualitätsanforderung, insbesondere Streamklasse, die von wenigstens einem Empfänger (2, 3, 4, 5) für einen von diesen angefragten Stream angegeben wird, empfangen wird. Des Weiteren betrifft die Erfindung eine Vorrichtung zur Durchführung des Verfahrens. Schließlich betrifft die Erfindung ein Computerprogramm und ein computerlesbares Medium.

## Beschreibung

Die Erfindung betrifft ein Verfahren zur Daten-Kommunikation in einem insbesondere industriellen Netzwerk. Darüber hinaus betrifft die Erfindung eine Vorrichtung zur Durchführung des Verfahrens. Schließlich betrifft die Erfindung ein Computerprogramm und ein computerlesbares Medium.

In Automatisierungssystemen für technische Prozesse beispielsweise kann es erforderlich sein, dass bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt. Die Übertragung echtzeitkritischer Daten muss insbesondere die Anforderungen einer vergleichsweise geringer Latenz und/oder einen hohen Verfügbarkeit erfüllen.

Time Sensitive Networking (TSN) bezeichnet eine Reihe von Standards, die den Bridging Standard IEEE 802.1Q um Mechanismen zur Übertragung echtzeitkritischer Daten über Ethernet-Netze erweitert. Zu den genannten Standards gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere Standards.

Mit dem Time Sensitive Network (TSN) ist ein Standard definiert, der die Qualität (Quality of Service - QoS oder auch Dienstgüte) in einem Netzwerk in Form von Streams garantiert. Ein Stream stellt eine unidirektionale Kommunikationsverbindung von einer Quelle (Talker) zu einem oder mehreren Senken (Listener) dar. Ein Talker verschickt Daten in der Regel periodisch bzw. kontinuierlich an einen oder mehrere Listener.

OPC UA ist ein industrielles M2M-Kommunikationsprotokoll. Dabei steht M2M für "Machine to Machine" und unter einem Kommunikationsprotokoll ist insbesondere eine Vereinbarung zu verstehen, nach der die Datenübertragung zwischen zwei oder mehr Parteien abläuft. Die Abkürzung OPC steht für OLE for Process Control und UA für Unified Architecture.

OPC UA PubSub (Publish/Subscribe) ist eine Erweiterung des bisherigen Client/Server-basierten Ansatzes von OPC UA, welcher unter anderem eine Integration einfacher (Feld-)Geräte an eine Cloud und auch die Kommunikation zwischen einfachen Feldgeräten und zwischen Steuerungen ermöglicht. OPC UA PubSub stellt somit grundlegenden Baustein zur Umsetzung von IIoT (Industrial Internet of Things) und Industrie 4.0 Anwendungen dar. PubSub ermöglicht auch Kommunikationsbeziehungen von einem Publisher zu n Subscribern.

Die Übertragung echtzeitkritischer Daten mittels OPC UA PubSub basiert auf der Verwendung von TSN-Streams. Das TSN-Netz stellt hierbei sicher, dass erforderliche Übertragungsqualitäten/Dienstgüten (beispielsweise maximale Ende-zu-Ende-Latenzzeiten, Jitter, garantierte Bandbreite) für die echtzeitkritische Kommunikation über die Dauer bzw. Lebenszeit eines TSN-Streams sichergestellt ist.

Die Anzahl von möglichen TSN-Streams in einem Netzwerk hängt jedoch von der verwendeten Hardware ab und bildet eine stark beschränkte Ressource. Der Anmelderin ist bekannt, dass die Stream-Dienstgüte derzeit ausschließlich von dem Sender/Publisher/Talker angegeben und bestimmt wird, ohne dass dabei Anforderungen der Daten vom Publisher empfangenden Empfänger/Subscriber/Listener berücksichtigt werden.

Es sei angemerkt, dass auf der Kommunikationsebene (TSN-Netz) bei einer Daten-Quelle vom einem Talker und einer Daten-Senke von einem Listener(n), auf der Anwendungsebene hingegen bei einer Daten-Quelle von einem Publisher und einer Daten-Senke von einem Subscriber gesprochen wird.

Der Anmelderin ist weiterhin bekannt, dass sich in industriellen Automatisierungsanlagen mitunter zahlreiche TCP/IPbasierte Applikationen beispielsweise zur Diagnose, zum Reporting von KPIs (Key Performance Indicators) sowie zur Protokollierung von Prozesswerten finden. Diese dienen in der Regel der Überwachung bestehender Automatisierungsanlagen sowie deren Fertigungs- und Automatisierungsprozesse, um etwa eine gewünschte Produktqualität sicherstellen zu können. Weiterhin werden die anfallenden Daten vermehrt auch zur Optimierung bestehender Produktionsprozesse (d.h. insbesondere der Automatisierungsanlagen- und -netze) verwendet, um beispielsweise die Produktqualität zu steigern, bzw. um Produktionskosten und Produktionszeiten zu senken. Bei diesen Anwendungen handelt es sich um nicht-echtzeitkritische Anwendungen. Das bedeutet, hinsichtlich dieser bestehen keine speziellen bzw. keine vergleichsweise hohen Anforderungen an die Dienstgüte bei der Übertragung der Daten im Automatisierungsnetz.

Werden zukünftig echtzeitkritische Daten, insbesondere Prozesswerte, mittels OPC UA PubSub etwa zwischen den Teilnehmern eines Automatisierungsnetzes ausgetauscht, wird dies zur Folge haben, dass sich nicht-echtzeitkritische Anwendungen ebenfalls für im TSN-Netz von einem oder mehreren Publishern angebotene (publish) OPC UA Datensätze (DataSets) abonnieren werden (subscribe). Das TSN-Netz wird dann für den Datentransfer zwischen dem/den Publisher(n) und dessen/deren Subscriber(n) TSN-Streams einrichten, wobei alle Streams die eine, vom Publisher abhängige Dienstgüte/Streamklasse aufweisen werden. Hiermit wird eine unbefriedigende Nutzung von in einem Netz vorhandener Ressourcen verbunden sein.

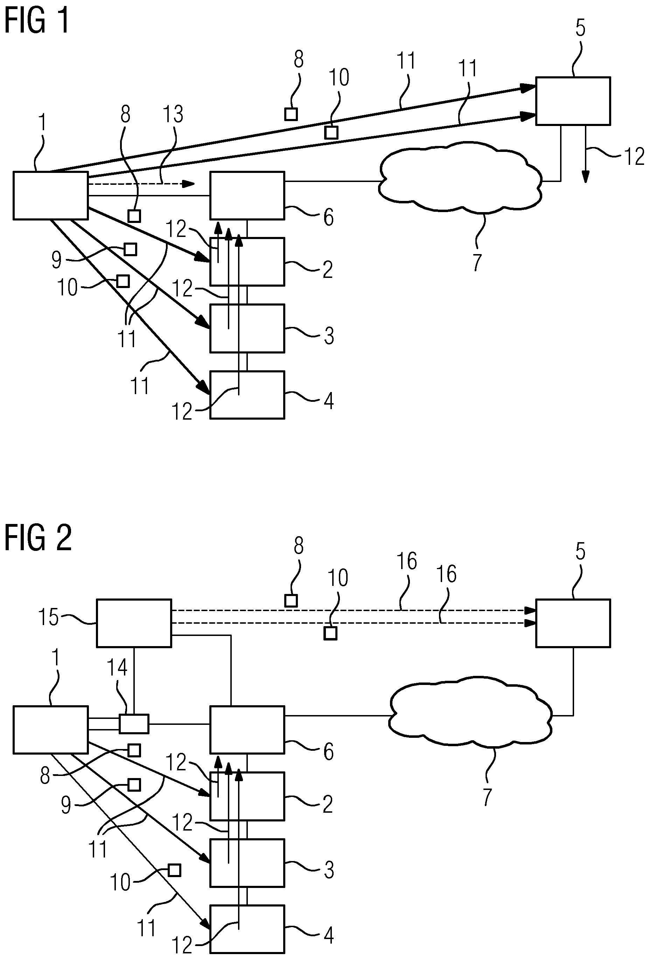

In Figur 1 ist dies rein schematisch skizziert. Ein Publisher, bei dem es sich bei dem dargestellten Beispiel um einen Controller in Form einer SPS 1 (speicherprogrammierbare Steuerung) einer industriellen Automatisierungsanlage handelt, hat vorliegend vier Subscriber, konkret drei echtzeitkritische Anwendungen in Form des Ausgangs von drei I/O-Geräten 2, 3, 4 der Anlage sowie eine nicht-echtzeitkritische Anwendung in Form eines Diagnoseservers 5 der Anlage. Die I/O-Geräte 2, 3, 4 und der Diagnoseserver 5 sind über einen TSN-Switch 6 mit dem Controller 1 verbunden. Mit der Wolke 7 in Figur 1 ist angedeutet, dass einer oder mehrere weitere TSN-Switche in dem TSN-Netz vorhanden sein können. Von der SPS 1 können vorliegend beispielhaft drei UPC UA DataSets 8, 9, 10 abonniert werden, die in den Figuren rein schematisch in Blockdarstellung angedeutet sind. Von den I/O-Geräten 2, 3, 4 hat jedes ein DataSet 8, 9, 10 in dieser Reihenfolge abonniert, was in der Figur dadurch angedeutet ist, dass das jeweilige DataSet 8, 9, 10 neben einem mit fetter Linie dargestellten Pfeil 11 zu dem I/O-Gerät 2, 3, 4 dargestellt ist. Die mit fetter Linie gezeichneten Pfeile 11 repräsentieren dabei in der Figur einen echtzeitkritischen TSN-Stream für den Transfer der DataSets 8, 9, 10. Die TSN-Streams wurden von den I/O-Geräten 2, 3, 4 angefragt, was in der Figur durch Pfeile 12 mit dünner Linie zwischen dem jeweiligen Gerät 2, 3, 4 und dem TSN-Switch 6 angedeutet ist, die den OPC UA PubSub Stream attach repräsentieren. Unter Stream attach ist dabei insbesondere die Anmeldung und Einrichtung der Subscriber-Vorhaben am Netz zu verstehen.

Auf die Stream-Anfrage seitens der Geräte 2, 3, 4 wurde von dem TSN-Netz, konkret dem TSN-Switch 6 jeweils ein Stream eingerichtet, wobei die von dem OPC UA Publisher, also der SPS 1 abhängige bzw. festgelegte TSN-Streamklasse gewählt wurde, die eine Echtzeit-Übertragung ermöglicht. Durch einen von der SPS 1 ausgehenden Pfeil 13 mit gepunkteter Linie ist in der Figur der OPC UA Stream create angedeutet. Unter Stream create ist insbesondere die Anmeldung und Einrichtung des Publisher-Vorhaben am Netz zu verstehen.

Auch der Diagnoseserver 5 abonniert vorliegend DataSets 8, 10 von der SPS 1, wobei in der Figur durch einen weiteren Pfeil 12 mit dünner Linie, der bei dem Diagnoseserver 5 entspringt, der OPC UA PubSub Stream attach angedeutet ist. Auf die Stream-Anfrage seitens des Diagnoseservers 5 wurde von dem TSN-Netz, konkret dem TSN-Switch 6 ebenfalls ein Stream für jedes der beiden DataSets 8,10 eingerichtet, und zwar wiederum mit der vom OPC UA Publisher, also der SPS 1 abhängigen bzw. festgelegten TSN-Streamklasse. Auch der Datentransfer zu dem Diagnoseserver erfolgt somit über Echtzeit-TSN-Streams, was durch Pfeile 12 angedeutet ist. Da der Diagnoseserver 5 nicht auf eine echtzeitkritische Übertragung angewiesen ist, werden die Daten mit einer unnötig hohen Streamklasse an diesen übertragen. Hierdurch werden die begrenzten Ressourcen im TSN-Netz unnötig verbraucht, so dass im Ergebnis weniger echtzeitkritische Streams im Netz möglich sind.

Eine der Anmelderin bekannte Möglichkeit dem zu begegnen besteht darin, Test Access Points (TAPs) 14 an bestimmten Punkten im Netz einzubringen, beispielsweise am Controller 1. Dies ist in der Figur 2 - für einen mit einem PC 15 verbundenen TAP 14 - rein schematisch dargestellt. Die weiteren in Figur 2 dargestellten Komponenten stimmen mit denjenigen aus Figur 1 überein und es werden gleiche Bezugsziffern für gleiche Komponenten verwendet. Der an der TAP 14 übertragene Netzwerkverkehr kann rückwirkungsfrei gelesen und ausgewertet werden. Von dem PC 15 können Daten, etwa die beiden DataSets 8, 10 wiederum an den Diagnoseserver 5 weitergegeben werden, was in der Figur 2 durch mit gestrichelter Linie gezeichnete Pfeile 16 angedeutet ist. Echtzeitkritische Streams des TSN-Netzes sind dann für den Datentransfer an den Server 5 nicht erforderlich, so dass die vorstehend angesprochene Ressourcen-Verschwendung vermieden wird. Mit dieser Vorgehensweise sind jedoch andere erhebliche Nachteile, insbesondere hohe Kosten für die TAP 14 sowie die Tatsache, dass ein physikalischer Zugang zum Netz erforderlich ist, verbunden. Ein weiterer gravierender Nachteil besteht in der zentralen Verarbeitung (z.B. Diagnose-, Reportserver) der ausgewerteten Informationen mehrerer TAPs. Da es sich bei TAPs 14 um passive Netzwerkkomponenten handelt, die das Einspeisen von Paketen ins Netz nicht gestatten, ist die Übertragung der ausgewerteten Daten vom PC 15 über den TAP 14 an den Diagnoseserver 5 nicht möglich.

Alternativ zum TAP 14 könnte, sofern dies unterstützt ist, auch Port-Mirroring am TSN-Switch 6 verwendet werden (in den Figuren nicht dargestellt). Dies hätte jedoch den weiteren Nachteil, dass Pakete (inbound und outbound) im TSN-Switch 6 durch Duplizieren auf den Mirror-Port übertragen werden. Dies hätte wiederum Auswirkungen auf ein an dem Mirror-Port des Switches angeschlossenes verarbeitendes Gerät, beispielsweise keine exakten Zeitstempel der übertragenen Pakete. Je nach Anwendung können die Auswirkungen nicht tolerierbar sein. Ein noch größeres Problem besteht darin, dass Mirror-Ports bei hohen Datenraten "überfordert" sein können, was dann dazu führen kann, dass an den Mirror-Port angeschlossene Geräte nicht alle tatsächlich übertragenen Datenpakete zu sehen bekommen, so dass keine zuverlässigen Ergebnisse erhalten werden können.

Ausgehend davon besteht die Aufgabe der vorliegenden Erfindung darin, Möglichkeiten zu schaffen, mit vergleichsweise geringem Aufwand, insbesondere unter besonders effizienter Nutzung zur Verfügung stehender Ressourcen, einen Datenaustausch sowohl echtzeitkritischer als auch nicht-echtzeitkritischer Anwendungen in industriellen Netzen zu realisieren.

Diese Aufgabe wird gelöst durch ein Verfahren zur Daten-Kommunikation in einem insbesondere industriellen Netzwerk, für einen Datentransfer zwischen wenigsten einem Daten anbietenden Sender und wenigstens einem, insbesondere mehreren von dem Sender über einen jeweiligen Netzwerkpfad Daten empfangenden Empfängern via SRP, bei dem von wenigstens einem Empfänger einen von ihm angefragten Stream eine gewünschte Stream-Qualitätsanforderung, insbesondere Streamklasse angegeben wird.

Die Abkürzung SRP steht dabei für das Stream Reservation Protocol.

Die von dem wenigstens einen Empfänger gewünschte Stream-Qualitätsanforderung wird in zweckmäßiger Ausgestaltung an das Netzwerk kommuniziert. Dies kann beispielsweise mittels (TSN) UNI-Interface oder auch via Stream Reservation Protocol (SRP) erfolgen. Dabei kann insbesondere vorgesehen sein, dass die Traffic Specification (TSpec) Anforderungen an das Netz, z.B. eine maximale Ende-zu-Ende Latenzzeit enthält. Die Kommunikation der gewünschten Qualitätsanforderung kann beispielsweise an einen oder mehrere Knotenpunkte des Netzwerkes, etwa wenigstens eine Bridge oder wenigstens einen Switch des Netzwerkes, und/oder an einen zentralen Netzwerkcontroller erfolgen.

Weiter bevorzugt wird für den wenigstens einen Empfänger der angefragte Stream eingerichtet, wobei für zumindest einen Pfadabschnitt des Netzwerkpfades von dem wenigstens einen Sender zu dem wenigstens einen Empfänger die gewünschte Stream-Qualitätsanforderung eingerichtet wird.

Bei der angegebenen, gewünschten Qualitätsanforderung kann es sich insbesondere um eine gewünschte Streamklasse und/oder Dienstgüte handeln. Auch eine gewünschte/erforderliche maximale Ende-zu Ende Latenzzeit kann angegeben werden.

Durch die erfindungsgemäße Vorgehensweise wird es möglich, für einen oder mehrere Empfänger (im TSN-Netz der/die Listener) die Qualität, insbesondere Dienstgüte an die tatsächlichen Anforderungen des oder der Empfänger(s) anzupassen und so Ressourcen zu sparen. Benötigt ein Empfänger eine gegenüber der vom Sender (im TSN-Netz der Talker) abhängigen Stream-Qualitätsanforderung, insbesondere Dienstgüte geringere/schwächere Stream-Qualitätsanforderung, insbesondere Dienstgüte, wird dies kommuniziert und ein Stream bzw. wenigstens ein Pfadabschnitt des zugehörigen Netzwerkpfades, der auch als Stream-Pfadsegment bzw. Stream-Pfadabschnitt bezeichnet werden kann, mit dieser geringeren Qualitätsanforderung bzw. Dienstgüte eingerichtet. Eine schwächere Qualitätsanforderung bzw. Dienstgüte kann beispielsweise in demjenigen Fall ausreichen, dass es sich bei dem Empfänger/Subscriber um eine Anwendung handelt, welche Daten vom Sender/Publisher nicht in Echtzeit benötigt, etwa um einen Diagnoseserver oder dergleichen. Ist hingegen die vom Sender/Publisher abhängige, insbesondere größtmögliche Dienstgüte, etwa für eine echtzeitkritische Anwendung erforderlich, wird für diese ein Stream entsprechender Qualitätsanforderung, insbesondere Stream-Klasse eingerichtet.

Es kann vorgesehen sein, dass von dem TSN-Netzwerk in Reaktion auf eine Streamanfrage unter Angabe einer gewünschten, insbesondere abgeschwächten Stream-Qualitätsanforderung, insbesondere. Streamklasse seitens eines Empfängers/Subscribers nur für einen Pfadabschnitt des Netzwerkpfades von dem Sender/Publisher zu diesem Empfänger/Subscriber die gewünschten Stream-Qualitätsanforderung, insbesondere Streamklasse eingerichtet wird oder für mehrere Pfadabschnitte oder auch für alle Pfadabschnitte, also den kompletten Netzwerkpfad vom Sender/Publisher zu diesem Empfänger/Subscriber, der die gewünschte insbesondere abgeschwächte Qualitätsanforderung bzw. Dienstgüte angegeben hat. Nur für einen Teil eines Netzwerkpfades, insbesondere einen oder mehrerer Pfadabschnitte, wird die gewünschte Qualitätsanforderung bzw. Dienstgüte insbesondere dann eingerichtet, wenn auf Pfadabschnitten, die sich der betroffene Empfänger/Subscriber mit einem oder mehreren anderen Empfängern/Subscribern teilt, bereits ein Stream für die angeforderten Daten mit einer höheren Qualitätsanforderung bzw. Dienstgüte als die vom Empfänger/Subscriber angeforderte eingerichtet wurde. Die geringere, von dem Empfänger/Subscriber gewünschte Qualitätsanforderung bzw. Dienstgüte wird dann nur für den verbleibenden Abschnitt seines Netzwerkpfades eingerichtet. Der Stream wird quasi an einen bis zu einem bestimmten Knotenpunkt, etwa Switch, bereits vorhandenen Stream "angeknüpft", wobei im Falle einer niedrigeren gewünschten Qualitätsanforderung diese dann erst ab dem "Anknüpfungspunkt" eingerichtet wird.

Es sei angemerkt, dass ein Netzwerkpfad zwischen zwei Daten austauschenden Teilnehmern in der Regel über mehrere Knotenpunkte, etwa Switche oder Bridges, von denen ggf. jeweils noch weitere Pfadabschnitte abzweigen, verläuft. Unter einem Pfadabschnitt oder Pfadsegment ist vorliegend ein Teilabschnitt eines zwei Teilnehmer, insbesondere einen Sender/Publisher/Talker und Empfänger/Subscriber/Listener verbindenden Netzwerkpfades zu verstehen, der sich zwischen zwei Knotenpunkten, insbesondere Switchen bzw. Bridges auf dem Netzwerkpfad erstreckt, wobei nicht ausgeschlossen ist, dass zwischen den beiden (End)Knotenpunkten des Pfadabschnittes bzw. - segmentes weitere Knotenpunkte, insbesondere Switche bzw. Bridges liegen können.

Wird das erfindungsgemäße Verfahren durchgeführt, werden insbesondere auf wenigstens zwei Pfadsegmenten wenigstens eines Streams unterschiedliche Streamklassen genutzt.

De Einrichtung wenigstens eines Pfadabschnittes eines Netzwerkpfades mit einer von einem Empfänger gewünschten Stream-Qualitätsanforderung, insbesondere Streamklasse kann über eine zentrale Stelle im Netzwerk, insbesondere über einen Netzwerkkontroller, etwa eine Netzwerkkarte, oder auch dezentral über das Netzwerk erfolgen.

Ein zentraler Netzwerkcontroller überprüft insbesondere die Dienstgüteanforderungen eines Senders/Empfängers (Subscribers/Publishers) an das Netz und gestattet bei vorhandenen Netzwerkressourcen Streams bzw. richtet sie ein oder lehnt sie andernfalls ab. Es kann sich um eine SW-Komponente auf einem gesonderten Netzwerkgerät handeln.

Im dezentralen Falle ist insbesondere vorgesehen, dass Qualitätsanforderungen an das Netz direkt durch das Netz, z.B. von allen Knotenpunkten, insbesondere Bridges oder Switches, zwischen Sender und Empfänger, also von der Quelle bis zum Ziel, geprüft und bei Vorhandensein von Ressourceneingerichtet bzw. anderenfalls abgelehnt werden. Dafür werden zweckmäßiger Weise ein entsprechendes Interface, z.B. (TSN) UNI sowie entsprechende Protokolle, z.B. Stream Reservation Protocol (SRP), verwendet.

Das erfindungsgemäße Verfahren dient besonders bevorzugt zur Daten-Kommunikation in einem insbesondere industriellen Netzwerk mittels OPC UA PubSub über TSN, besonders bevorzugt in einem TSN-Netzwerk einer industriellen Automatisierungsanlage, für einen Datentransfer zwischen wenigsten einem Daten anbietenden OPC UA Publisher (Sender) und wenigstens einem von dem Publisher über einen Netzwerkpfad Daten empfangenden OPC UA Subscriber (Empfänger), insbesondere mehreren von dem Publisher über einen jeweiligen Netzwerkpfad Daten empfangenden OPC UA Subscribern, wobei von wenigstens einem Subscriber für den Datenempfang vom Publisher ein Stream angefragt und von dem TSN-Netzwerk ein Stream gemäß dem den IEEE 802.1 Standard erweiternden TSN-Standard eingerichtet wird, wobei von dem Subscriber eine gewünschte TSN-Streamklasse für den von ihm angefragten Stream angegeben und von dem TSN-Netzwerk zumindest für einen Pfadabschnitt des Netzwerkpfades von dem Publisher zu dem Subscriber die gewünschten TSN-Streamklasse eingerichtet wird.

Zur Durchführung des erfindungsgemäßen Verfahrens, insbesondere zur Etablierung von Streams bzw. Stream-Pfadsegmente/- abschnitte mit den gewünschten Eigenschaften kann auf bestehende (TSN-)Reservierungstools zurückgegriffen werden.

Da der/die Empfänger/Listener erfindungsgemäß eine eigene Qualitätsanforderung bzw. eigene Dienstgüteparameter (QoS) definieren, kann die Effizienz in einem Netzwerk insgesamt deutlich erhöht werden. Denn Streams bzw. Stream-Pfadsegmente mit niedrigerer Qualitätsanforderung/Dienstgüte benötigen weniger Ressourcen im Netz, da gilt, dass umso höher die Qualität, insbesondere Streamklasse, desto kleiner die Pakete sein müssen und desto häufiger die Pakete übertragen werden (Latenz). Kommt eine Empfänger/Subscriber mit einer geringeren/abgeschwächten Qualitätsanforderung bzw. Dienstgüte aus, können so gezielt Ressourcen geschont werden und stehen somit für eine andere Nutzung bereit. Da erfindungsgemäß seitens des Empfängers/Subscribers eine gewünschte, insbesondere "abgeschwächte" Qualitätsanforderung bzw. Dienstgüte angegeben werden kann, wird es möglich, dass das Netzwerk, insbesondere das TSN-Netzwerk Stream-Pfadsegmente erkennt, auf denen der Stream mit einer niedrigeren Qualitätsanforderung bzw. Streamklasse übertragen werden kann, was wiederum zu einer Ressourcenentlastung des gesamten Netzes führt. (TSN-)Streamklassen für die echtzeitkritische Datenübertragung werden nicht belastet bzw. "verschwendet".

Ein weiterer Vorteil der erfindungsgemäßen Vorgehensweise ist, dass - insbesondere bei Nutzung von OPCUA PubSub über TSN - trotz der verschiedenen Dienstgüteanforderungen keine zusätzlichen OPC UA DataSet-Writer erforderlich sind.

Ein DataSet Writer ist für das Schreiben/Versenden eines einzelnen DataSets (Menge an vorher festgelegten insbesondere OPC UA Variablen) verantwortlich, das heißt dieser schreibt bzw. erzeugt das DataSet mit einer angegebenen Dienstgüte, z.B. 100 mal pro Sekunde. Da die Filterung im Netz (z.B. an dem ersten Knotenpunkt, insbesondere Bridge oder Switch, bzw. je nach Tree und Empfänger-Dienstgüteanforderungen an den Sender evtl. auch an einem anderen Knotenpunkt, insbesondere Bridge bzw. Switch, im Netz) basierend auf den Dienstgüteanforderungen des/der Empfänger(s) erfolgt, muss trotz einer abweichenden, insbesondere abgeschwächten Dienstgüteanforderung von einem oder mehreren Empfängern kein weiterer DataSet Writer mit abweichender Dienstgüte erstellt werden, sondern es ist nur ein DataSet Writer mit der (maximalen) Dienstgüte im Sender erforderlich. Netzwerkressourcen werden entsprechend nicht verschwendet.

Auch ist kein TAP bzw. Port-Mirroring erforderlich, wofür zusätzliche Hardware und deren Wartung und Pflege und ein physikalischer Zugriff bzw. Eingriff erforderlich wären. Da ein TAP in der Regel zusätzliche Verkabelung für eine direkte Verbindung mit einem PC benötigt, kann auch eine solche eingespart werden.

Für das erfindungsgemäßen Verfahren kann zum Beispiel ein bestehender/bestehendes OPC UA PubSub-Mechanismus/-Protokoll zur ressourcenschonenden Übertragung von Daten auch an eine nicht-echtzeitkritische Anwendung, etwa einen Diagnose-Server genutzt werden, wobei erfindungsgemäß die Anwendung die zu verwendende Qualität, insbesondere (TSN-)Streamklasse vorgibt.

Insbesondere, da das erfindungsgemäße Verfahren eine effiziente, Ressourcen-schonende Übertragung von echtzeitkritischen sowie nicht-echtzeitkritischen Daten ohne weitere Hardware und ohne physischen Zugriff/Eingriff ermöglicht, ist es ideal auch für Cloud-Computing Anwendungen geeignet und kann zum Einsatz kommen, wenn eine Virtualisierung erfolgt und/oder auf echtzeitfähige Rechenzentren insbesondere im Zusammenhang mit der Automatisierung, zugegriffen wird.

Im Rahmen des erfindungsgemäßen Verfahrens kann vorgesehen sein, dass der Sender mehrere Empfänger hat und von wenigstens einem Empfänger eine gewünschte Stream-Qualitätsanforderung, insbesondere (TSN-)Streamklasse angegeben und zumindest ein Pfadabschnitt des Netzwerkpfades von dem Sender zu dem Empfänger mit der gewünschten Stream-Qualitätsanforderung, insbesondere (TSN-)Streamklasse eingerichtet wird, die sich von der Stream-Qualitätsanforderung, insbesondere (TSN-)Streamklasse zumindest eines Pfadabschnittes des Netzwerkpfades von dem Sender zu einem anderen seiner Empfänger unterscheidet.

Selbstverständlich ist es auch möglich, dass ein Sender/Publisher/Talker nicht nur Daten zur Verfügung stellt, sondern auch Daten empfängt, also in einem Netz auch Empfänger/Subscriber/Listener ist. Umgekehrt ist dies natürlich gleichermaßen alternativ oder zusätzlich möglich.

Weiterhin kann vorgesehen sein, dass es eine von dem Sender abhängige Standard- Stream-Qualitätsanforderung, insbesondere Standard-(TSN-)Streamklasse gibt, und für wenigstens einen Empfänger eine gewünschte Stream-Qualitätsanforderung, insbesondere (TSN-)Streamklasse angegeben und zumindest ein Pfadabschnitt des Netzwerkpfades von dem Sender zu dem Empfänger mit der gewünschten Stream-Qualitätsanforderung, insbesondere (TSN-)Streamklasse eingerichtet wird, die unterhalb der Standard- Stream-Qualitätsanforderung, insbesondere Standard-(TSN-)Streamklasse des Senders liegt.

Unter der "Standard-Stream-Qualitätsanforderung" bzw. "Standard-Streamklasse" ist dabei insbesondere eine vom Sender abhängige bzw. festgesetzte Stream-Qualitätsanforderung, insbesondere Dienstgüte zu verstehen, die bevorzugt die maximal mögliche Stream-Qualitätsanforderung, insbesondere Dienstgüte bildet.

Das erfindungsgemäße Verfahren wird besonders bevorzugt zum Datentransfer zwischen wenigstens einem Sender und wenigstens einem echtzeitkritischen Empfänger und/oder zum Datentransfer zwischen (dem) wenigstens einem Sender und wenigstens einem nicht-echtzeitkritischen Empfänger durchgeführt. Dann erfolgt zweckmäßiger Weise der Datentransfer zwischen dem Sender und einem nicht-echtzeitkritischen Empfänger über einen Netzwerkpfad, der wenigstens einen Pfadabschnitt umfasst, für den eine geringere Stream-Qualität, insbesondere geringere (TSN-)Streamklasse eingerichtet wurde als für die Pfadabschnitte eines Netzwerkpfades zwischen dem Sender und einem echtzeitkritischen Empfänger.

Bei einem echtzeitkritischen Empfänger kann es sich beispielsweise um eine echtzeitkritische Anwendung einer industriellen Anlage oder eines Fahrzeuges handeln. Ein nicht-echtzeitkritischer Empfänger kann in analoger Weise etwa durch eine nicht-echtzeitkritische Anwendung einer/der industriellen Anlage oder eines/des Fahrzeuges gegeben sein. Ein besonders effizienter Transfer von Daten von einem Sender sowohl an wenigstens einen Empfänger, welcher die Daten echtzeitkritisch benötigt, als auch an wenigstens einen Empfänger für welchen dies nicht gilt, ist dann möglich.

Rein beispielhaft sei für einen echtzeitkritischen Empfänger ein I/O-Gerät bzw. ein HMI-Gerät genannt und/oder für einen nicht-echtzeitkritischen Empfänger ein Diagnoseserver oder dergleichen.

Bevorzugt werden in einem (TSN-)Netz Streams mit echtzeitkritischen Stream-Qualitätsanforderungen, insbesondere (TSN-)Streamklassen ausschließlich für Empfänger darstellende Anwendungen eingerichtet, die dies explizit angefordert haben, besonders bevorzugt ausschließlich für Anwendungen, welche darauf angewiesen sind, also ausschließlich zur Übertragung tatsächlich echtzeitkritischer Daten.

Ein weiterer Gegenstand der Erfindung ist ein Steuerungsverfahren für einen industriellen technischen Prozess oder ein Fahrzeug, bei dem zwischen wenigstens zwei Komponenten eines Steuerungssystems Daten unter Durchführung des erfindungsgemäßen Verfahrens zur Daten-Kommunikation ausgetauscht werden, und bei dem auf Basis der ausgetauschten Daten eine Steuerung des industriellen technischen Prozesses oder Fahrzeugs erfolgt.

Auch kann eine industrielle Anlage auf Basis erfindungsgemäß ausgetauschter Daten gesteuert werden. Aufgrund der besonders effizienten Netz-Ressourcen-Nutzung wird dann auch eine besonders effiziente Prozessdurchführung bzw. ein besonders effizienter Betrieb der Anlage möglich.

Die vorstehende Aufgabe wird weiterhin gelöst durch eine Vorrichtung umfassend
- wenigstens einen insbesondere TSN-fähigen Switch und/oder eine insbesondere TSN-fähige Bridge, bevorzugt mehrere insbesondere TSN-fähige Switche und/oder insbesondere TSN-fähige Bridges, und
- wenigstens ein einen Sender, insbesondere einen OPC UA PubSub Publisher bildendes Gerät, insbesondere einen Controller einer industriellen Automatisierungsanlage oder eines Fahrzeuges, und/oder
- einen oder mehrere jeweils einen Empfänger, insbesondere einen OPC UA PubSub Subscriber bildende Endgeräte , die Daten über wenigstens einen insbesondere TSN-fähigen Switch oder wenigstens eine insbesondere TSN-fähige Bridge empfangen,
wobei die Vorrichtung zur Durchführung des erfindungsgemäßen Verfahrens zur Daten-Kommunikation bzw. des erfindungsgemäßen Steuerungsverfahrens ausgebildet und eingerichtet ist.

Die Erfindung betrifft weiterhin ein Steuerungssystem für einen industriellen technischen Prozess, das eine erfindungsgemäße Vorrichtung umfasst.

Die erfindungsgemäße Vorrichtung kann auch einen Bestandteil einer industriellen Automatisierungsanlage darstellen bzw. einer solchen zugeordnet sein.

Weiterhin betrifft die Erfindung ein Computerprogramm umfassend Programmcode-Mittel zur Durchführung des erfindungsgemäßen Verfahrens zur Daten-Kommunikation bzw. des erfindungsgemäßen Steuerungsverfahrens für einen industriellen technischen Prozess oder ein Fahrzeug.

Schließlich betrifft die Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Daten-Kommunikation bzw. erfindungsgemäßen Steuerungsverfahren für einen industriellen technischen Prozess oder ein Fahrzeug durchzuführen.

Weitere Merkmale und Vorteile der vorliegenden Erfindung werden anhand der nachfolgenden Beschreibung einer Ausführungsform des Verfahrens gemäß der vorliegenden Erfindung unter Bezugnahme auf die beiliegende Zeichnung deutlich. Darin ist
- Figur 1: eine rein schematische Darstellung zur echtzeitkritischen Kommunikation mittels OPC UA PubSub über TSN auch für eine nicht-echtzeitkritische Diagnoseanwendung;
- Figur 2: eine rein schematische Darstellung zur Lösung mit TAP für die nicht-echtzeitkritische Diagnoseanwendung;
- Figur 3: eine rein schematische Darstellung zur Kommunikation mittels OPC UA PubSub über TSN mit echtzeitkritischer und nicht-echtzeitkritischer Dienstgüte gemäß der vorliegenden Erfindung; und
- Figur 4: eine weitere rein schematische Darstellung des in Figur 3 dargestellten erfindungsgemäßen Ausführungsbeispiels.

Die Figuren 1 und 2 zeigen eine rein schematische Darstellung zu einer echtzeitkritischen Kommunikation mittels OPC UA PubSub über TSN auch für nicht-echtzeitkritische Diagnoseanwendungen sowie eine rein schematische Darstellung zur Lösung mit einer TAP 14 für die nicht-echtzeitkritische Diagnoseanwendung, die vorstehend bereits im Einzelnen erläutert wurden.

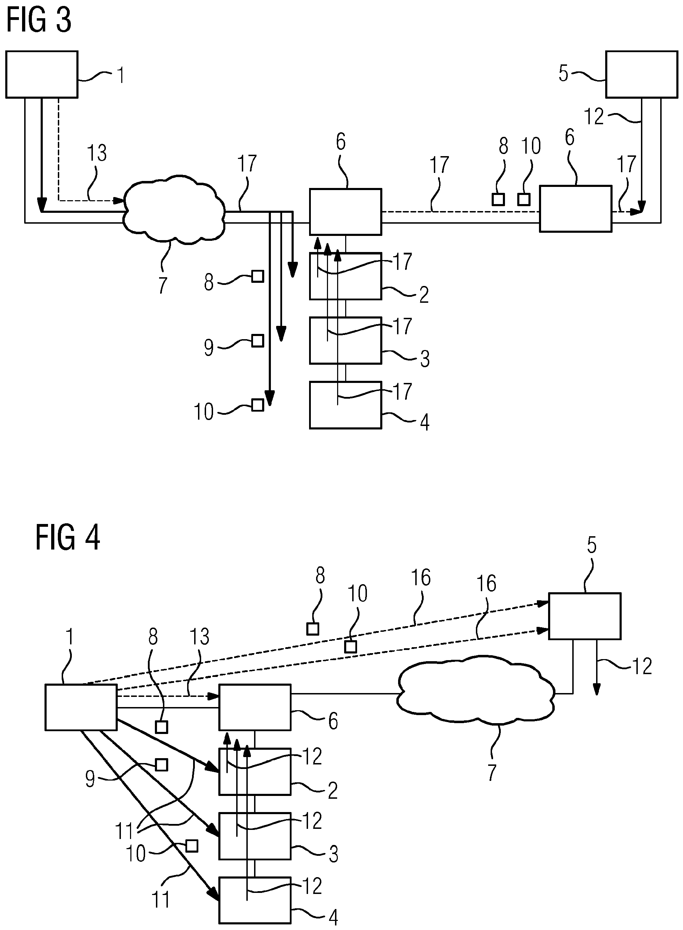

Die Figuren 3 und 4 enthalten eine ebenfalls rein schematische Darstellung zur Kommunikation mittels OPC UA PubSub über TSN mit Streams mit echtzeitkritischer und nicht-echtzeitkritischer Dienstgüte, wie sie die vorliegende Erfindung vorsieht. Dabei sind für gleiche Komponenten die gleichen Bezugsziffern verwendet, wie in den Figuren 1 und 2.

Analog zu den Figuren 1 und 2 sind in der Figur 3 ein durch eine SPS 1 gegebener Controller, drei I/O-Geräte 2, 3, 4, ein Diagnoseserver 5, ein TSN-Switch 6 und eine Wolke 7, welche andeutet, dass weitere TSN-Switche 6 vorhanden sein können, erkennbar. Es sei angemerkt, dass die Wolke 7 in den Figuren 3 und 4 an verschiedenen Stellen im Netz eingezeichnet ist. Dies soll nur verdeutlichen, dass vor und/oder nach dem einzeln dargestellten TSN-Switch 6 noch ein weiterer oder auch mehrere weitere TSN-Switche 6 vorhanden sein können.

Die dargestellte Hardware bildet Teil eines Ausführungsbeispiels einer erfindungsgemäßen Vorrichtung zur Durchführung des erfindungsgemäßen Verfahrens, wobei die Vorrichtung vorliegend wiederum Teil einer in den Figuren nicht weiter dargestellten industriellen Automatisierungsanlage ist. Das TSN-Netzwerk ist entsprechend ein industrielles Netz.

Im Folgenden wird ein Ausführungsbeispiel des erfindungsgemäßen Verfahrens zur Daten-Kommunikation in dem industriellen Netzwerk näher beschrieben.

In Analogie zu den Figuren 1 und 2 stellt die SPS 1 vorliegend drei DataSets 8, 9, 10 zur Verfügung, von denen jedes der drei I/O-Geräte 2, 3, 4 jeweils ein DataSet 8, 9, 10 abonnieren möchte und der Diagnoseserver 5 die DataSets 8 und 10.

Der Datenaustausch findet mittels OPC UA PubSub über TSN statt. Die Daten zur Verfügung stellende SPS 1 stellt dabei einen OPC UA Publisher dar und die drei I/O-Geräte 2, 3, 4 und der Diagnoseserver 5 jeweils OPC UA Subscriber. Auf der Ebene des TSN-Netzes, also auf der Kommunikationsebene ist der Publisher, also die SPS 1 ein Talker und die Subscriber, also die I/O-Geräte 2, 3,4 und der Diagnoseserver 5 sind Listener.

Für den Datentransfer von der SPS 1 zu den I/O-Geräten 2, 3, 4 sowie dem Diagnoseserver 5 fragen diese jeweils einen Stream an, was in den Figuren 3 und 4 - erneut in Analogie zu den Figuren 1 und 2 - durch Pfeile 12 mit dünner Linie angedeutet ist (die Pfeile repräsentieren den OPC US PubSub Stream attach).

Das TSN-Netzwerk richtet in Reaktion auf die Anfragen jeweils einen Stream gemäß dem den IEEE 802.1 Standard erweiternden TSN-Standard mit einer bestimmten TSN-Streamklasse zwischen dem Publisher, also vorliegend der SPS 1 und dem jeweiligen Subscriber, also vorliegend einem der Geräte 2, 3,4 bzw. dem Diagnoseserver 5 ein.

In Abweichung zu den im Zusammenhang mit den Figuren 1 und 2 oben beschriebenen Vorgehensweisen wird erfindungsgemäß von jedem Subscriber, also jedem der drei I/O-Geräte 2, 3, 4 und dem Diagnoseserver 5 eine gewünschte Dienstgüte, konkret gewünschte TSN-Streamklasse für den angefragten Stream für den Datenempfang angegeben. Das bedeutet, die Listener im TSN-Netz geben im Rahmen der Streamanfrage jeweils eine eigene Qualitätsanforderung an (durch Pfeile 12 angedeuteter OPC UA PubSub Stream attach).

Von dem TSN-Netz wird in Reaktion darauf erfindungsgemäß für jeden Subscriber bzw. Listener 2, 3, 4, 5 zumindest für einen Pfadabschnitt 17 des Netzwerkpfades von dem Publisher 1 zu dem jeweiligen Subscriber 2, 3, 4, 5 die gewünschten TSN-Streamklasse eingerichtet, was in Figur 3 besonders gut zu erkennen ist.

Da die I/O-Geräte 2, 3, 4 die DataSets 8, 9, 10 von der SPS 1 echtzeitkritisch benötigen, der Diagnoseserver 5 jedoch nicht, wird von den Geräten 2, 3, 4 eine höhere, eine echtzeitkritische Datenübertragung sicherstellende TSN-Streamklasse angegeben und von dem Diagnoseserver 5 eine niedrigere, keine echtzeitkritische Datenübertragung sicherstellende TSN-Streamklasse und von dem TSN-Netz werden Streams bzw. Stream-Pfadsegmente mit den unterschiedlichen Streamklassen eingerichtet. Die von den Geräten 2, 3, 4 gewünschte Dienstgüte entspricht vorliegend der echtzeitkritischen Dienstgüte der SPS 1 und diejenige des Diagnoseservers 5 unterschreitet diese.

Dabei werden das TSN UNI Interface sowie Streamreservierungsprotokolle von TSN, z.B. SRP verwendet. Die Dienstgüteanforderungen an das Netz werden direkt durch das Netz, also allen Switche 6 von der SPS 1 zu den jeweiligen Subscribern 2, 3, 4, 5 geprüft und bei vorhandenen Ressourcen, was vorliegend der Fall ist, eingerichtet. Die Einrichtung erfolgt bei dem dargestellten Ausführungsbeispiel also dezentral über das TSN-Netz.

In der Figur 4 ist rein schematisch angedeutet, für welche Pfadsegmente die höhere und für welche die niedrigere Dienstgüte eingerichtet wird. Wie man erkennt, wird für den an der SPS 1 entspringenden Pfadabschnitt 17 bis zum ersten TSN-Switch 6 eine echtzeitkritische Dienstgüte eingerichtet. Gleiches gilt für die Pfadabschnitte 17 zwischen dem ersten TSN-Switch 6 und den drei I/O-Geräten 2, 3, 4. Für die beiden bei dem dargestellten Ausführungsbeispiel verbleibenden Pfadabschnitte 17 zwischen dem zweiten und dritten TSN-Switch 6 sowie zwischen dem dritten TSN-Switch 6 und dem Diagnoseserver 5 wird hingegen die vom Diagnoseserver 5 angegebene abgeschwächte Dienstgüte eingerichtet. Das bedeutet, eine geringere Dienstgüte wird nur für die Pfadabschnitte 17 gewählt, die sich an die Pfadabschnitte 17, für welche die ohnehin die echtzeitkritische Dienstgüte für den Transfer an die I/O-Geräte 2, 3, 4 erforderlich ist, anschließen bzw. an diese anknüpfen, dies an dem ersten TSN-Switch 6.

Es sei angemerkt, dass für den Fall, dass von einem Subscriber eine Dienstgüte angefragt würde, welche oberhalb der seitens des Publishers vorgegebenen, maximal möglichen Dienstgüte für einen Stream liegt, der Stream verweigert oder ein Stream mit der Publisher-Dienstgüte eingerichtet werden könnte.

Durch die erfindungsgemäße Vorgehensweise kann die Effizienz in einem Netzwerk insgesamt deutlich erhöht werden. Da erfindungsgemäß seitens des/der Subscriber(s) eine gewünschte, insbesondere "abgeschwächte" Dienstgüte angegeben werden kann, wird es möglich, dass das TSN-Netzwerk Stream-Pfadsegmente erkennt, auf denen der Stream mit einer niedrigeren Streamklasse übertragen werden kann, was wiederum zu einer Ressourcenentlastung des gesamten Netzes führt. Denn Streams mit niedrigerer Dienstgüte benötigen weniger Ressourcen im Netz, da gilt, dass umso höher die Streamklasse, desto kleiner die Pakete sein müssen und desto häufiger die Pakete übertragen werden (Latenz). Kommt eine Subscriber, wie vorliegend der Diagnoseserver 5 mit einer geringeren/abgeschwächten Dienstgüte aus, können so gezielt Ressourcen geschont werden und stehen dann für eine andere Nutzung bereit. TSN-Streamklassen für die echtzeitkritische Datenübertragung werden entsprechend nicht belastet bzw. "verschwendet".

In der Figur 4 ist die unterschiedliche Dienstgüte für die Übertragung der DataSets 8, 9, 10 zu den I/O-Geräten 2, 3, 4 und dem Diagnoseserver 5 noch in Analogie zu den Darstellungen aus den Figuren 1 und 2 mit entsprechenden Pfeilen 11 und 16 angedeutet, die jeweils nicht über den Netzwerkpfad laufen, sondern von dem Publisher 1 zu dem jeweiligen Subscriber 2, 3,4, 5 zeigen. Über den Vergleich der Figuren 1, 2 und 4 wird besonders deutlich, worin sich die erfindungsgemäße Vorgehensweise von den beiden anderen aus den Figuren 1 und 2 unterscheidet.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Rein beispielhaft sei darauf verwiesen, dass neben den drei dargestellten I/O-Geräten 2, 3, 4 sowie dem Diagnoseserver 5 natürlich weitere oder auch andere insbesondere Listener in dem TSN-Netz darstellende Geräte bzw. Komponenten oder auch weniger als diese vier Listener vorhanden sein. Neben der SPS 1 können ferner noch weitere oder auch andere als Talker in dem TSN-Netz fungierende Komponenten vorhanden sein, die jeweils Daten an einen oder mehrere Listener übertragen. Die SPS 1, die I/O-Geräte 2, 3, 4 und der Diagnoseserver 5 sind als ein rein Beispielhafte Talker-Listener Konstellation zu verstehen. Weiterhin ist es möglich, dass ein Publisher/Talker gleichzeitig Subscriber/Listener ist und umgekehrt. Neben den in den Figuren gezeigten TSN-Switchen 6 können ferner noch weitere Switche und/oder Switche an anderen Stellen im Netz vorgesehen sein, was durch die in den Figuren dargestellte Wolke 7 bereits angedeutet ist.

## Patentansprüche

1. Verfahren zur Daten-Kommunikation in einem insbesondere industriellen Netzwerk, für einen Datentransfer zwischen wenigsten einem Daten anbietenden Sender (1) und wenigstens einem, insbesondere mehreren von dem Sender (1) über einen jeweiligen Netzwerkpfad Daten empfangenden Empfängern (2, 3, 4, 5) via SRP, bei dem von wenigstens einem Empfänger (2, 3, 4, 5) für einen von ihm angefragten Stream eine gewünschte Stream-Qualitätsanforderung, insbesondere Streamklasse angegeben wird.

2. Verfahren nach Anspruch 1, **dadurch gekennzeichnet, dass** die von dem wenigstens einen Empfänger (2, 3, 4, 5) gewünschte Stream-Qualitätsanforderung, insbesondere Streamklasse an das Netzwerk kommuniziert wird.

3. Verfahren nach einem der vorhergehenden Ansprüche, **dadurch gekennzeichnet, dass** für den wenigstens einen Empfänger (2, 3, 4, 5) der angefragte Stream eingerichtet wird, wobei für zumindest einen Pfadabschnitt (17) des Netzwerkpfades von dem wenigstens einen Sender (1) zu dem wenigstens einen Empfänger (2, 3, 4, 5) die gewünschten Stream-Qualitätsanforderung, insbesondere Streamklasse eingerichtet wird.

4. Verfahren Anspruch 3, **dadurch gekennzeichnet, dass** die Einrichtung wenigstens eines Pfadabschnittes (17) eines Netzwerkpfades mit einer von einem Empfänger (2, 3, 4, 5) gewünschten Stream-Qualitätsanforderung, insbesondere Streamklasse über eine zentrale Stelle im Netzwerk, insbesondere über einen Netzwerkkontroller, etwa eine Netzwerkkarte, oder dezentral über das Netzwerk erfolgt.

5. Verfahren nach einem der vorhergehenden Ansprüche, **dadurch gekennzeichnet, dass** der Sender (1) mehrere Empfänger(2, 3, 4, 5) hat und von wenigstens einem Empfänger (2, 3, 4, 5) eine gewünschte Stream-Qualitätsanforderung, insbesondere Streamklasse angegeben und zumindest ein Pfadabschnitt (17) des Netzwerkpfades von dem Sender (1) zu dem Empfänger (2, 3, 4, 5) mit der gewünschten Qualitätsanforderung, insbesondere Streamklasse eingerichtet wird, die sich von der entsprechenden Stream-Qualitätsanforderung, insbesondere Streamklasse zumindest eines Pfadabschnittes (17) des Netzwerkpfades von dem Sender (1) zu einem anderen seiner Empfänger (2, 3, 4, 5) unterscheidet.

6. Verfahren nach Anspruch 5, **dadurch gekennzeichnet, dass** es eine von dem Sender (1) abhängige Standard-Stream-Qualitätsanforderung, insbesondere Streamklasse gibt, und für wenigstens einen Empfänger (2, 3, 4, 5) eine gewünschte Stream-Qualitätsanforderung, insbesondere Streamklasse angegeben und zumindest ein Pfadabschnitt (17) des Netzwerkpfades von dem Sender (1) zu dem Empfänger (2, 3, 4, 5) mit der gewünschten Stream-Qualitätsanforderung, insbesondere Streamklasse eingerichtet wird, die unterhalb der Standard-Stream-Qualitätsanforderung, insbesondere Streamklasse des Senders (1) liegt.

7. Verfahren nach Anspruch 5 oder 6, **dadurch gekennzeichnet, dass** das Verfahren zum Datentransfer zwischen wenigstens einem Sender (1) und wenigstens einem echtzeitkritischen Empfänger (2, 3, 4), der insbesondere durch eine echtzeitkritische Anwendung einer industriellen Anlage oder eines Fahrzeuges gegeben ist, und/oder zum Datentransfer zwischen wenigstens einem Sender (1) und wenigstens einem nicht-echtzeitkritischen Empfänger (5), der insbesondere durch eine nicht-echtzeitkritische Anwendung einer industriellen Anlage oder eines Fahrzeuges gegeben ist, durchgeführt wird.

8. Verfahren nach Anspruch 7, **dadurch gekennzeichnet, dass** der Datentransfer zwischen dem Sender (1) und einem nicht-echtzeitkritischen Empfänger (5) über einen Netzwerkpfad erfolgt, der wenigstens einen Pfadabschnitt (17) umfasst, für den eine geringere Stream-Qualitätsanforderung, insbesondere Streamklasse eingerichtet wurde als für die Pfadabschnitte (17) eines Netzwerkpfades zwischen dem Sender (1) und einem weiteren, echtzeitkritischen Empfänger (2, 3, 4).

9. Verfahren nach Anspruch 7 oder 8, **dadurch gekennzeichnet, dass** es sich bei wenigstens einem echtzeitkritischen Empfänger (2, 3, 4) um ein I/O-Gerät und/oder bei wenigstens einem echtzeitkritischen Empfänger (2, 3, 4) um ein HMI-Gerät und/oder bei wenigstens einem nicht-echtzeitkritischen Empfänger (5) um einen Diagnoseserver handelt.

10. Steuerungsverfahren für einen industriellen technischen Prozess oder ein Fahrzeug, bei dem zwischen wenigstens zwei Komponenten eines Steuerungssystems Daten unter Durchführung des Verfahrens nach einem der vorhergehenden Ansprüche ausgetauscht und auf Basis der ausgetauschten Daten eine Steuerung des industriellen technischen Prozesses oder Fahrzeugs erfolgt.

11. Vorrichtung umfassend
- wenigstens einen insbesondere TSN-fähigen Switch (6) und/oder eine insbesondere TSN-fähige Bridge, bevorzugt mehrere insbesondere TSN-fähige Switche (6) und/oder insbesondere TSN-fähige Bridges, und
- wenigstens ein einen Sender, insbesondere einen OPC UA PubSub Publisher bildendes Gerät, insbesondere einen Controller (1) einer industriellen Automatisierungsanlage oder eines Fahrzeuges, und/oder
- einen oder mehrere jeweils einen Empfänger, insbesondere einen OPC UA PubSub Subscriber bildende Endgeräte (2, 3, 4, 5), die Daten über wenigstens einen insbesondere TSN-fähigen Switch (6) oder wenigstens eine insbesondere TSN-fähige Bridge empfangen,
wobei die Vorrichtung zur Durchführung des Verfahrens nach einem der vorhergehenden Ansprüche ausgebildet und eingerichtet ist.

12. Steuerungssystem für einen industriellen technischen Prozess umfassend eine Vorrichtung nach Anspruch 11.

13. Computerprogramm umfassend Programmcode-Mittel zur Durchführung des Verfahrens nach einem der Ansprüche 1 bis 10.

14. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 10 durchzuführen.
